# EUROPÄISCHE PATENTSCHRIFT

(11) **EP 1 594 323 B1**
(45) Veröffentlichungstag und Bekanntmachung des Hinweises auf die Patenterteilung: **24.10.2012**
(21) Anmeldenummer: 05016076.1
(22) Anmeldetag: 25.01.2001
(51) Int. Cl.: H04W 4/12

(54) **Verfahren zur Übertragung von bestimmten MMS-Nachrichten durch SMS-Nachrichten**
Method for transmitting certain MMS-messages by SMS-messages
Procédé pour la transmission de certaines messages MMS par des messages SMS

(30) Priorität: 02.02.2000 DE 10004260
(43) Veröffentlichungstag der Anmeldung: 09.11.2005
(62) Teilanmeldung aus: 01909521.5
(73) Patentinhaber: IPCom GmbH & Co. KG, 82049 Pullach (DE)
(72) Erfinder: Laumen, Josef, 31141 Hildesheim (DE); Reinecke, Joerg, 38173 Sickte (DE); Schange, Frank, 31137 Hildesheim (DE); Schmidt, Gunnar, 38302 Wolfenbuettel (DE)
(74) Vertreter: Molnia, David

(56) Entgegenhaltungen:
- EP-A- 1 091 601
- WO-A-01/13656
- WO-A-97/08906
- WAP WDP VERSION: "Wireless Application Protocol; Wireless datagram Protocol Specification", WIRELESS APPLICATION PROTOCOL. WIRELESS DATAGRAM PROTOCOLSPECIFICATION, XX, XX, 5 November 1999 (1999-11-05), pages 1-78, XP002979452,
- 'Technical specification 3G TS 23.140 v1.0.0' 31 Dezember 1999,
- 'Technical specification 3G TS 23.040 v3.3.0' 31 Dezember 1999,

## Beschreibung

### STAND DER TECHNIK

Die Erfindung betrifft ein Verfahren zur Übertragung von Nachrichten in einem Telekommunikationsnetzwerk, in dem ein erster Nachrichtendienst und ein zweiter Nachrichtendienst verfügbar sind.

Obwohl prinzipiell auf beliebige Multimedia-Nachrichtendienste und Telekommunikationsnetzwerke anwendbar, werden die vorliegende Erfindung sowie die ihr zu Grunde liegende Problematik in Bezug auf den MMS-Service (MMS = Multimedia Messaging Service) erläutert, der im Rahmen der Standardisierung von 3GPP (3^{rd} Generation Project Program) z.Zt. spezifiziert wird und insbesondere im GSM-System (GSM = Global System for Mobile Commmunications) und im UMTS-System (UMTS = Universal Mobile Telecommunication System) eingesetzt werden kann.

Allgemein sind in Telekommunikationsnetzwerken bereits Kurznachrichtendienste bekannt, die dazu dienen, einem Teilnehmer des Telekommunikationsnetzwerkes eine Kurznachricht zu senden, ohne daß vorher eine Telekommunikationsverbindung zu diesem Teilnehmer aufgebaut werden muß.

Dies ist besonders in Mobilfunksystemen wie dem GSM von Bedeutung, da dort Teilnehmer oftmals nicht erreichbar sind. Dabei werden für den Teilnehmer eingehende Kurznachrichten von einem Netzbetreiber des Telekommunikationsnetzwerkes gespeichert, wenn der Teilnehmer nicht erreichbar ist. Zu einem späteren Zeitpunkt, wenn der Teilnehmer wieder erreichbar ist, wird die Kurznachricht dann automatisch an diesen Teilnehmer übermittelt.

Als Kurznachrichtendienst gemäß dem GSM-Standard ist der SMS-Service (SMS = Short Message Service) bekannt. Dabei können in einer Kurznachricht bis zu 160 7-Bit ASCII-Textzeichen (ASCII = American Standard Code for Information Interchange) übertragen werden. Die Übertragung von längeren Texten ist mit Hilfe von verketteten Kurznachrichten möglich. Da nur eine Textübertragung gemäß dem GSM-Standard vorgesehen ist, müssen bei der Übertragung von binären Daten, wie beispielsweise Audiodaten, Bilddaten, oder dergleichen diese in das Textformat umgewandelt und nach dem Empfang wieder in das Binärformat zurückgewandelt werden.

Dabei ist nur der Zugriff auf den gesamten Inhalt einer Kurznachricht möglich. Dadurch werden gegebenenfalls auch vom adressierten Teilnehmer nicht gewollte Daten der Kurznachricht zu ihm übertragen. Einen Überblick über den Inhalt der Kurznachricht bekommt er erst, nachdem er die vollständige Kurznachricht vom Netzbetreiber erhalten hat.

Aus der 3GPP Technischen Spezifikation TS 23.140 V1.0.0, Multimedia Service (MMS), Functional description, ist ein Verfahren bekannt, das den nicht Echtzeit Multimedia Messaging Service (MMS) beschreibt. Sie enthält die Kernfunktionen für einen vollständigen Dienst für die Stufe 2. Dazu enthält sie die Liste der benötigten Elemente und Schnittstellen. Soweit als möglich sind dabei existierende Protokolle und existierende Nachrichtenformate für die Realisierung benutzt.

Aus der 3GPP Technischen Spezifikation TS 23.040 V3.3.0, Technical Realization of the Short Message Service (SMS), ist der Kurznachrichtendienst (SMS) für GSM und UMTS Netzwerke bekannt. Sie beschreibt die Dienste und Dienstelemente, die Netzwerkarchitektur, die Service Center Funktion, Mobile Switching Center (MSC) und Serving GPRS Support Node (SGSN), die Routing Elemente die Protokolle und die Protokollebenen dieses Dienstes. Der Network Service für höhere Schichten ist in der Spezifikation definiert.

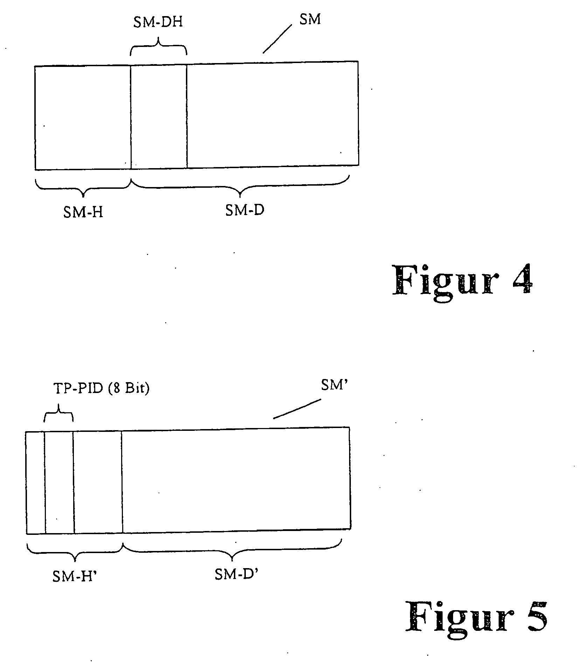

Fig. 4 zeigt den prinzipiellen Aufbau eines ersten Typs A einer SMS-Kurznachricht in GSM.

Eine SMS-Kurznachricht SM des ersten Typs A besteht grundsätzlich aus einem Header bzw. Vorspann SM-H und einem Datenteil SM-D. Der Header SM-H enthält Signalisierungseinträge sowie die Empfängeradresse bei einer zu sendenden Nachricht bzw. die Senderadresse bei einer zu empfangenden Nachricht. Der Datenteil SM-D enthält die eigentliche zu übermittelnde Nachricht.

Sender bzw. Empfänger werden gemäß GSM 03.40 V7.1.0 (1998-11) Technical realisation of the Short Message Service (SMS); Point-to-Point (PP) und 3G 23.040 V3.2.0 (1999-10) Technical realisation of the Short Message Service (SMS); Point-to-Point (PP) über die MSISDN (Mobile Subscriber Integrated Services Digital Network) Nummer identifiziert.

Optional kann ein zweiter Header, der sog. User Data Header bzw. Benutzerdaten-Header SM-DH, im Datenteil SM-D vorhanden sein. Ist dies der Fall, wird es durch einen entsprechenden Signalisierungseintrag im Header SM-H angezeigt. Unterschiedliche Typen von SMS User Data Header sind in GSM 03.40/3G 23.040 bereits spezifiziert. Unterschiedliche Typen von User Data Header SM-DH werden durch ein Identifikationselement im User Data Header SM-DH unterschieden.

Das Verketten von Kurznachrichten SM wird z.B. bereits über einen solchen User Data Header SM-DH gesteuert (Identifier: "08" hexadezimal). Ein weiteres Beispiel für einen solchen User Data Header SM-DH ist das "Wireless Control Message Protocol", welches durch den Identifier "09" in hexadezimaler Schreibweise gekennzeichnet ist. Dieses wird für das Wireless Application Protocol (WAP) benötigt.

Fig. 5 zeigt den prinzipiellen Aufbau eines zweiten Typs B einer SMS-Kurznachricht in GSM.

Auch in diesem Fall besteht eine SMS-Kurznachricht SM' grundsätzlich aus einem Header SM-H' und einem Datenteil SM-D'. Der Header SM-H' enthält wieder Signalisierungseinträge sowie die Empfängeradresse bei einer zu sendenden Nachricht bzw. die Senderadresse bei einer zu empfangenden Nachricht. Der Datenteil SM-D' enthält die eigentlich zu übermittelnde Nachricht.

Im Header SM-H' existiert bereits ein 8 Bit breites Feld, welches als TP-PID (Transfer Protocol - Protocol Identifier) bezeichnet wird. Allgemein dient der Parameter TP-PID zur Festlegung des verwendeten Protokolls. Speziell wird er benutzt, um Telematic Interworking zu realisieren oder das Handling von Nachrichten im Mobiltelefon bzw. im SMSC (Sohrt Message Service Center) zu definieren.

Beim Telematic Interworking ist das TP-PID ein Bitmuster der Form <001xxxxx>, d.h. Bit 7=0, Bit 6=0 und Bit 5=1.

Taucht dieses Bitmuster im TP-PID des Headers SM-H' einer von einem Mobiltelefon versandten SMS-Kurznachricht SM' auf, so wird das SMSC (Short Message Service Center) dazu veranlaßt, die vorliegende SMS in ein anderes Daten-Format zu konvertieren und/oder ein bestimmtes Kommunikationsprotokoll auszuführen. Auf diese Weise kann z.B. von einem Mobiltelefon aus ein Fax der Gruppe 3 an ein Faxgerät im Festnetz gesandt werden. Der Wert des gesamten TP-PID-Oktetts ist in diesem Fall <00100010>.

Taucht dieses Bitmuster im TP-PID des Headers SM-H' einer von einem Mobiltelefon empfangenen SMS-Kurznachricht SM' auf, so hat das SMSC eine Nachricht von einem SMS-fremden Telematik-Dienst empfangen und diese in eine SMS umgewandelt. Auf diese Weise kann z.B. von einem beliebigen Email-Account im Festnetz eine Internet-Email über das Service Center an ein Mobiltelefon gesandt werden. Der Wert des empfangenen TP-PID-Oktetts ist in diesem Fall <00110010>.

Im Falle des Handling von Nachrichten ist das TP-PID ein Bitmuster der Form <01xxxxxx> , d.h. Bit 7=0 und Bit 6=1.

Taucht dieses Bitmuster im TP-PID des Headers SM-H' einer von einem Mobiltelefon empfangenen SMS-Kurznachricht SM' auf, so veranlaßt das SMSC das Mobiltelefon zu einem bestimmten Handling der Nachricht. Auf diese Weise kann z.B. vom SMSC ein Mobiltelefon dazu veranlaßt werden, die empfangene Nachricht an die SIM (Subscriber Identity Module) weiterzureichen, wo diese dann entsprechend des SIM Aplication Toolkits weiter verarbeitet wird. Der Wert des empfangenen TP-PID-Oktetts ist in diesem Fall <01111111>.

Taucht dieses Bitmuster im TP-PID des Headers SM-H' einer von einem Mobiltelefon versandten SMS-Kurznachricht SM' auf, so wird z.B. im Falle des Bitmusters <01000001> das SMSC dazu veranlaßt, eine bereits vorliegende Kurznachricht desselben Mobiltelefons mit der empfangenen Kurznachricht zu überschreiben.

Der MMS-Service ist ein Service, der das Versenden und Empfangen von Multimedia-Nachrichten mittels Mobiltelefon ermöglichen soll. Der aktuelle (vorläufige) Stand der Standardisierung von MMS findet sich in 3G TS 23.140, MMS Stage 2 , v.1.0.0. Eine Multimedia-Nachricht (MM = Multimedia Message) soll anders als eine SMS-Kurznachricht weder auf eine bestimmte Größe noch auf die Darstellung von Text beschränkt sein. Eine MM soll stattdessen vielfältige Medientypen unterstützen.

Eine zentrale Funktion kommt im MMS Service dem MMS-Relay zu. Dieses Element kann über unterschiedlichste Medien an verschiedenartige Server (z.B. Email-Server, Fax-Server, Voice-Mailbox, MMS-Server) angeschlossen werden, wie in 3G TS 23.140, MMS Stage 2 , v.1.0.0 gezeigt. Es dient dazu, dem mobilen Benutzer all jene Informationen/Nachrichten zugänglich zu machen, welche auf den o.g. Servern vorliegen.

Über das MMS-Relay hat der Mobile-Benutzer somit Zugriff auf seine Emails, die auf dem Email-Server liegen, oder auf Faxe, welche auf einem Fax-Server auf ihn "warten", oder auf Sprach-Nachrichten, welche auf seiner Voice-Mailbox aufgezeichnet wurden, etc.. Neben dem Empfang von Nachrichten ist es auch angedacht, daß der Mobile-Benutzer Nachrichten verfaßen und diese über das MMS-Relay an den gewünschten Empfänger verschicken kann.

In 3G TS 23.140, MMS Stage 2 , v.1.0.0 u.a. ist u.a. vorgesehen, daß der Nutzer des MMS-Dienstes sich zunächst bei seinem MMS-Diensteanbieter anmeldet (session establishment). Von diesem kann er dann entsprechend seinem Diensteprofil eine Quittierung der Anmeldung erhalten (receipt). Liegen ungelesene Nachrichten auf seinem MMS-Server für ihn vor, so kann er hierüber eine Mitteilung (notification) bekommen, und zwar ebenfalls entsprechend seinem Diensteprofil.

Ein MMS-Server kann hierbei für einen oder mehrere beliebige Server stehen, z.B. ein oder mehrere Email-Server, Fax-Server, evtl. spezielle MMS-Server (falls ein eigenständiges MM-Format standardisiert wird) oder beliebige Kombinationen aus diesen.

Genauso kann er entsprechend seinem Diensteprofil eine Nachricht erhalten, wenn während einer MMS Sitzung (session) eine neue Nachricht am MMS Server ankommt.

Ist sein Profil so eingestellt, daß er keine automatische notification über ungelesene und/oder neue MM-Nachrichten bekommt, so soll laut Spezifikation der MMS-Dienst dem Benutzer die Möglichkeit bieten, eine solche notification explizit vom MMS-Relay anzufordern (explicit notification-query).

Ebenfalls im Diensteprofil kann der Benutzer spezifizieren, ob er vom Service Provider (Dienstanbieter) eine Bestätigung über den Erfolg des Versendens von MMs an andere Benutzer erhalten möchte. Hierbei können zwei Arten unterschieden werden.

Zum einen kann der Benutzer eine Rückmeldung vom MMS-Relay erhalten, daß seine ausgesandte Nachricht erfolgreich über die Luftschnittstelle zum Relay gesandt wurde:
(ACK/NACK submission 1: positive/negative acknowledgement of submission to Relay).

Desweiteren kann er vom Empfänger und/oder vom MMS-Relay eine Rückmeldung über den erfolgreichen Empfang der Nachricht am Empfänger bekommen:
ACK/NACK submission 2 = positive/negative end-to-end acknowledgement of submission to receiver.

Auch soll der MMS-Dienst die Möglichkeit bieten, daß der Service Provider (das MMS-Relay) eine Rückmeldung über den Erfolg/Mißerfolg der Delivery einer MM zu einem Teilnehmer erhält:

### ACK/NACK delivery.

In 3G TS 23.140, MMS Stage 2 , v.1.0.0, 3GPP TSG T WG 2, November 1999, ist weiterhin vorgesehen, das automatische Downloaden von Nachrichten über eine SMS zu triggern (pull-push).

Die o.g. Funktionalitäten bzw. Nachrichten hinsichtlich der MM sind in der Applikationsebene beschrieben, ihre Realisierung ist jedoch offen. Doch lassen sich alle diese und ähnliche Funktionalitäten bzw. Nachrichten in den verschiedensten Formen implementieren.

Die der vorliegenden Erfindung zugrundeliegende Problematik besteht allgemein darin, daß im MMS-Nachrichtendienst verschiedene Arten von Nachrichten versendet werden, also z.B. die oben erwähnten Benachrichtigungen vom System und eigentliche Benutzernachrichten, wobei auch letztere in ihrem Inhalt sehr verschieden sein können, also kurze Textnachrichten oder lange Bild-, Ton- oder sonstige Nachrichten sein können. Das hat zur Folge, daß es kein für alle Nachrichten gleichermaßen optimiertes Übertragungsschema gibt.

### VORTEILE DER ERFINDUNG

Die der vorliegenden Erfindung zu Grunde liegende Idee besteht darin, daß vorbestimmte Nachrichten des MMS Nachrichtendienstes durch Nachrichten des SMS Nachrichtendienstes gesendet werden.

Das erfindungsgemäße Verfahren mit den Merkmalen des Anspruches 1 weist den besonderen Vorteil auf, daß für die vorbestimmten Nachrichten des MMS Nachrichtendienstes ein optimiertes Übertragungsschema erhalten werden kann.

Im konkreten Beispiel wird für die vorbestimmten Nachrichten im MMS-Nachrichtendienst durch den SMS-Nachrichtendienst ein Übertragungsschema gewählt, das ein einfaches Abschicken vorsieht, also auf eine leitungsorientierte Übertragung, z.B. durch GSM circuit switched data oder GPRS general packet radio servive oder UMTS circuit bzw. packet switched data, welche stets mit viel Overhead für Verbindungs-/Sessionsaufbau verbunden sind, verzichtet werden.

Gemäß einer bevorzugten Weiterbildung werden die Nachrichten des SMS Nachrichtendienstes ohne eine leitungsorientierte Übertragung zwischen Sender und Empfänger gesendet.

Gemäß einer weiteren bevorzugten Weiterbildung wird eine vorbestimmte zweite Gruppe von Nachrichten des MMS Nachrichtendienstes mit einer leitungsorientierten Übertragung zwischen Sender und Empfänger gesendet.

Die vorbestimmte erste Gruppe von Nachrichten des ersten Nachrichtendienstes enthält dabei mindestens eine Nachricht zur Rückmeldung über den erfolgreichen Empfang einer Multimedia Nachricht am Empfänger vom Empfänger und/oder vom MMS-Relay. Folgende Nachrichten könnten auch zu der ersten Gruppe gehören:
➢ vorbestimmte MMS-Benutzernachrichten (z.B. kurze Textnachrichten)
➢ die Benachrichtigung über das Vorliegen einer Nachricht auf dem MMS-Server (notification)
➢ die Anmeldung zu einer MMS-Sitzung (session establishment)
➢ die Quittierung dieser Anmeldung (receipt)
➢ das explizite Anfordern einer notification vom MMS-Relay (explicit notification-query)
➢ die Bestätigung über den Empfang von versendeten MMs im Relay (ACK/NACK_submission_1)
➢ die Bestätigung über den Erfolg des Versendens von MMs an andere Benutzer (ACK/NACK_submission_2)
➢ das Triggern des automatischen MM-Download (pull-push).

Diese Realisierung hat den Vorteil, daß SMS bereits existiert und somit die Nutzung dieses Dienstes die Einführung und Akzeptanz von MMS am Markt erleichtert. Mit SMS steht ein zuverlässiger Service für die o.g. Benachrichtigungen zur Verfügung. Es ist keine zusätzliche Signalisierung zur Übertragung der Benachrichtigungen nötig, wenn SMS benutzt wird. SMS bietet einen bandbreiteschonenden Service für solche einfachen Benachrichtigungen, der überdies gleichzeitig zu laufenden Verbindungen bzw. Sessions im GSM-, GPRS- und UMTS-System genutzt werden kann. SMS steht auch in Mobiltelefonen der zweiten Generation (z.B. GSM) zur Verfügung. Ein Benutzer kann also wesentliche Merkmale des MMS-Dienstes nutzen, ohne daß er hierzu unbedingt ein (teures) Mobiltelefon der dritten Generation (z.B. UMTS) benötigt.

### ZEICHNUNGEN

Ausführungsbeispiele der Erfindung sind in der Zeichnung dargestellt und werden in der folgenden Beschreibung näher erläutert.

Es zeigen:
- Figur 1: den Aufbau einer SMS-Kurznachricht des ersten Typs A in GSM bei einer Ausführungsform, die nicht zu der Erfindung gehört;
- Figur 2: den Aufbau einer SMS-Kurznachricht des ersten Typs A in GSM bei der Ausführungsform des erfindungsgemäßen Verfahrens;
- Figur 3: den Aufbau einer SMS-Kurznachricht des zweiten Typs B in GSM bei einer Ausführungsform , die nicht zu der Erfindung gehört;
- Figur 4: den prinzipiellen Aufbau eines ersten Typs A einer SMS in GSM; und
- Figur 5: den prinzipiellen Aufbau eines zweiten Typs B einer SMS-Kurznachricht in GSM.

### BESCHREIBUNG DER AUSFÜHRUNGSBEISPIELE

In den Figuren bezeichnen gleiche Bezugszeichen gleiche oder funktionsgleiche Elemente.

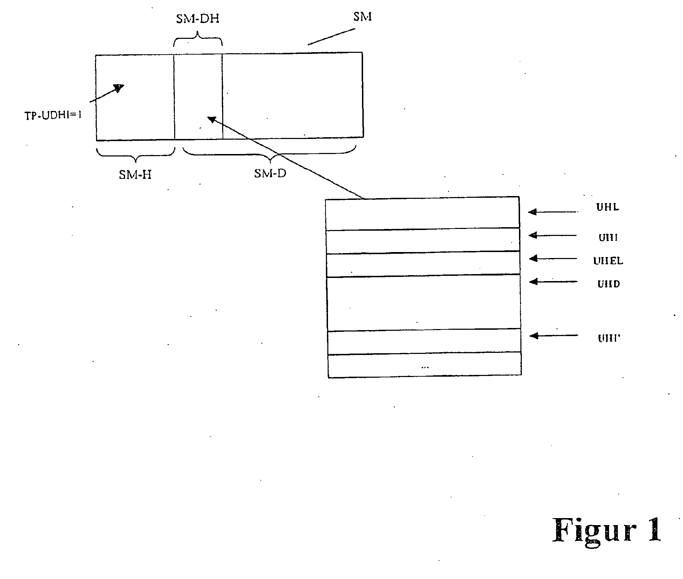

Figur 1 zeigt den Aufbau einer SMS-Kurznachricht des ersten Typs A in GSM bei einer ersten Ausführungsform, die aber nicht Gegenstand der Erfindung ist.

Bei der ersten Ausführungsform nach Fig. 1 ist der erste Nachrichtendienst der MMS-Nachrichtendienst und ist der zweite Machrichtendienst der SMS-Nachrichtendienst und ist die vorbestimmte erste Gruppe von Nachrichten des MMS-Nachrichtendienstes:
➢ vorbestimmte MMS-Benutzernachrichten (z.B. kurze Textnachrichten)
➢ die Benachrichtigung über das Vorliegen einer Nachricht auf dem MMS-Server (notification)
➢ die Anmeldung zu einer MMS-Sitzung (session establishment)
➢ die Quittierung dieser Anmeldung (receipt)
➢ das explizite Anfordern einer notification vom MMS-Relay (explicit notification-query)
➢ die Bestätigung über den Empfang von versendeten MMs im Relay (ACK/NACK_submission_1)
➢ die Bestätigung über den Erfolg des Versendens von MMs an andere Benutzer (ACK/NACK_submission_2)
➢ die Rückmeldung über den Erfolg/Mißerfolg der Delivery einer MM erhält (ACK/NACK_delivery)
➢ das Triggern des automatischen MM-Download (pull-push).

Fig. 1 zeigt konkret den User Data Header SM-DH einer SMS-Kurznachricht des Typs A für das session establishment beim MMS-Service.

Entsprechend der Standards GSM 03.40 V7.1.0 (1998-11) Technical realisation of the Short Message Service (SMS); Point-to-Point (PP) und 3G 23.040 V3.2.0 (1999-10) Technical realisation of the Short Message Service (SMS); Point-to-Point (PP) wird im Header SM-H das Vorhandensein eines User Data Header SM-DH gekennzeichnet durch das Flag TP-UDHI = 1.

Ebenfalls standardkonform ist die Formatierung des User Data Header SM-DH. Er beginnt mit der User Data Header Länge UHL. Dann folgt die Identification UHI des ersten Headerelements, hier nun beispielhaft "MMS session establishment Header" (Hex. 22). Dann folgt die Länge UHEL des ersten Headerelements, hier also die notwendige Länge für die "MMS session establishment Header" Information. Abschließend die "MMS session establishment Header" Datenfelder UHD, welche hier die User-ID und die User-Profil-ID sind. Mit der User-ID authentifiziert sich der Benutzer seinem Service Provider gegenüber, und mit der Profile-ID wählt er das für diese MMS-Sitzung gewünschte Dienste-/Benutzerprofil aus.

Dann können weitere User Data Headerelemente folgen, z.B. zur SMS Verkettung, und zwar beginnend mit der Identification UHI' des zweiten Headerelements und weiter analog wie das erste Headerelement aufgebaut.

Für den Fall das nur der "MMS session establishment Header" (im Beispiel Hex. 22) vorhanden ist, müssen nach dem o.e. Standard die notwendigen SMS-Header/SMS-User Data Header Felder folgendermaßen kodiert werden:
- SMS Header:: TP-UDHI=1 (User Data Header vorhanden),

SMS User Data Header:
- UDHL = User Data Header Länge UHL,
- IEI = UHI = 22 (User Data Header Identification = Hex. 22 für MMS session establishment),
- IEIDL = Länge dieses User Data Header Elements UHEL
- weitere Informationen: User-ID, Profile-ID
- SMS Data: leer oder weiterer SMS User Data Header oder Text-Nachricht

Für jeden Typ von vorbestimmter MMS-Nachricht muß ein eindeutiger User Data Header Indicator UHI definiert sein.

Eine Mappingtabelle könnte folgendermaßen aussehen:

| Typ von vorbestimmter MMS-Nachricht | IEI-Code |
|---|---|
| MMS user message | 20 |
| MMS notificaton | 21 |
| MMS session establishment | 22 |
| MMS receipt (of establishment) | 23 |
| MMS explicit notification-query | 24 |
| MMS ACK/NACK of submission (1) | 25 |
| MMS ACK/NACK of submission (2) | 26 |
| MMS ACK/NACK of delivery | 27 |
| MMS pull-push | 28 |

### Tabelle 1: Beispielhafte Zuweisung von Information Element Identifiers (IEI)

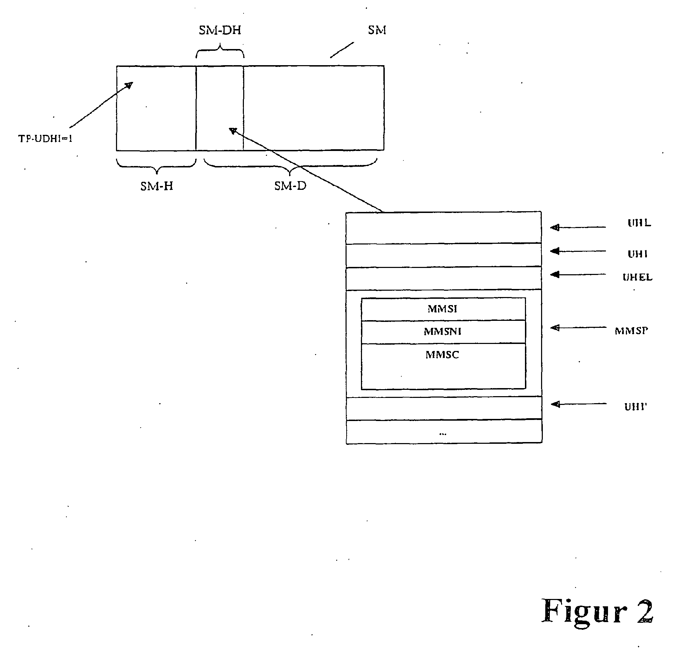

Figur 2 zeigt den Aufbau einer SMS-Kurznachricht des ersten Typs A in GSM bei der Ausführungsform des erfindungsgemäßen Verfahrens.

Die zweite Ausführungsform nach Fig. 2 ist ähnlich wie die erste Ausführungsform, umfaßt aber einen WCMP (Wireless Control Message Protocol) User Data Header mit eingebettetem MMS-Protokoll im Beispiel für das MMS session establishment.

Die Identifikation UHI dieses User Data Headers ist als hexadezimal 09 den Standards GSM 03.40 V7.1.0 (1998-11) Technical realisation of the Short Message Service (SMS); Point-to-Point (PP) und 3G 23.040 V3.2.0 (1999-10) Technical realisation of the Short Message Service (SMS); Point-to-Point (PP) entsprechend.

Wie in Fig. 2 gezeigt, beginnt der User Data Header SM-DH mit der User Data Header Länge UHL. Dann folgt die Identification UHI des ersten Headers, hier nun Hex. 09 für WCMP. Dann folgt die Länge dieses User Data Headerelements UHEL, hier die notwendige Länge für den "WCMP" Header (incl. des gesamten eingebetteten MMS-Protokolls). Abschließend folgen die "WCMP" Felder im MMS-Protokoll, hier als MMSP bezeichnet. Diese umfassen zunächst eine Kennzeichnung MMSI, daß mit Hilfe dieses WCMP-Feldes ein MMS-Protokoll realisiert wird (auch MMS-Identifier genannt). Welcher Art dieses MMS-Protokoll ist, wird durch den folgenden Identifier MMSNI gekennzeichnet. Dieser gibt also an, um welchen Typ einer MMS-Message es sich handelt, und entspricht somit dem Inhalt des Parameters UHI bei der ersten Ausführungsform. Der Parameter MMSC bezeichnet wiederum User-ID und Profile-ID beim Beispiel "MMS Session Establishment".

Ähnlich wie im ersten Ausführungebeispiel muß für jeden Typen der Messages ein eindeutiger Indikator definiert sein.

Eine Mappingtabelle könnte folgendermaßen aussehen:

| Typ von vorbestimmter MMS-Nachricht | MMSNI-Code |
|---|---|
| MMS user message | 0 |
| MMS notificaton | 1 |
| MMS session establishment | 2 |
| MMS receipt (of establishment) | 3 |
| MMS explicit notification-query | 4 |
| MMS ACK/NACK of submission (1) | 5 |
| MMS ACK/NACK of submission (2) | 6 |
| MMS ACK/NACK of delivery | 7 |
| MMS pull-push | 8 |

### Tabelle 2: Beispielhafte Zuweisung von MMSNI-Codes

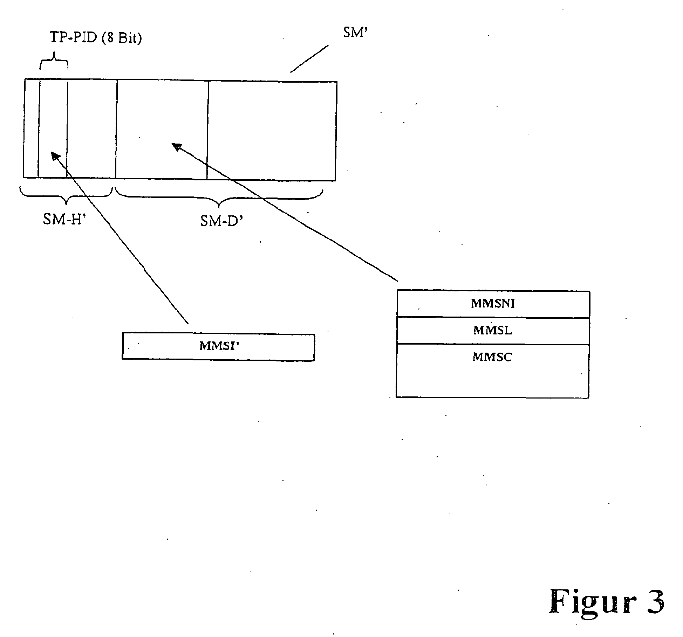

Figur 3 zeigt den Aufbau einer SMS-Kurznachricht des zweiten Typs B in GSM bei einer dritten Ausführungsform, die aber nicht Gegenstand der Erfindung ist..

Während in den obigen beiden Ausführungsformen der User Data Header für die Realisierung von MMS-Benachrichtigungen benutzt wurde, ist ebenfalls denkbar, den TP-PID zur Kennzeichnung einer solchen Benachrichtigung zu verwenden. In diesem Falle nimmt das Service Center am Protokoll teil, während es in den obigen beiden Ausführungsformen lediglich die Daten transparent weiterleitet.

In vorliegenden Beispiel wird angenommen, daß das MMS Relay ein spezielles MMS Protokoll mit dem SMSC fährt, d.h. Benachrichtigungen für den Benutzer vom MMS-Relay in einem speziellen MMS-Format an das SMSC gesendet werden, um diese Nachrichten dem Benutzer zu übermitteln, oder Benachrichtigungen vom Benutzer über das SMSC an das MMS-Relay gesendet werden.

Im SMSC werden diese Benachrichtigungen dann vom SMS in das MMS-Format umgewandelt (und umgekehrt) - ähnlich wie heute bereits SMS in Fax umgewandelt werden kann.

Hierzu wird der Parameter TP-PID in der SMS-Kurznachricht SM' auf einen für den MMS-Dienst spezifischen Wert MMSI gesetzt. Durch diese Angabe wird für Sender und Empfänger eindeutig festgelegt, daß in den User Daten weitere MMS-Protokoll spezifische Informationen folgen. Diese können wie folgt aussehen.

Ein zusätzlicher MMS Message Identifier MMNSI' kennzeichnet, um welche Art Benachrichtigung es sich handelt, z.B. daß es sich um ein "MMS Session Establishment" handelt, welches vom Benutzer zum MMS-Relay gesandt wird. Diese Identifier MMNSI' können z.B. wieder wie der Parameter MMSNI in Tabelle 2 ausgeführt sein und bspw. 8 Bit zur Darstellung beanspruchen. Anschließend legt ein bspw. 8 Bit breites Feld MMSL die Länge der folgenden MMS-Informationen MMSC fest. Diese sind abhängig von der Art der Benachrichtigung. Im Falle des "MMS session establishment" können wie erwähnt User ID und die ID des gewünschten Profiles in MMSC mitgeteilt werden.

Je nachdem, ob Telematic Interworking_oder Message Handling gewünscht ist, kann der TP-PID in der Form <001xxxxx> (z.B. <00110011>) oder <01xxxxxx> (z.B. <01001000>) vorliegen.

Desweiteren kann der Aufbau der Kurznachrichten variiert werden. Auch können weitere Kriterien zur Bestimmung der über den zweiten Nachrichtendienst zu sendenden Nachrichten des ersten Nachrichtendienstes herangezogen werden, wie z.B. Netzauslastung etc.

## Patentansprüche

1. Verfahren zur Übertragung von Nachrichten in einem Telekommunikationsnetzwerk, in dem ein erster Nachrichtendienst und ein zweiter Nachrichtendienst verfügbar sind, wobei eine vorbestimmte erste Gruppe von Nachrichten des ersten Nachrichtendienstes durch Nachrichten des zweiten Nachrichtendienstes gesendet wird, wobei der erste Nachrichtendienst der MMS Nachrichtendienst und der zweite Nachrichtendienst der SMS Nachrichtendienst ist, wobei die erste Gruppe von Nachrichten des MMS Nachrichtendienstes mindestens eine Nachricht zur Rückmeldung über den erfolgreichen Empfang einer Multimedia Nachricht (MM) am Empfänger vom Empfänger und/oder vom MMS-Relay enthalt, wobei diese Rückmeldung über den erfolgreichen Empfang einer Multimedia Nachricht (MM) am Empfänger vom Empfänger und/oder vom MMS-Relay durch eine SMS-Kurznachricht an den Sender der Multimedia Nachricht (MM) gesendet wird,
wobei die SMS-Kurznachricht (SM) des SMS Nachrichtendienstes einen Header (SM-H) und einen Datenteil (SM-D) aufweist, wobei der Datenteil (SM-D) einen User Data Header (SM-DH) aufweist, der ein Headerelement umfasst, wobei im Header (SM-H) das Vorhandensein des User Data Headers (SM-DH) durch ein Flag (TP-UDHI) gekennzeichnet wird, wobei der User Data Header (SM-DH) ein WCMP (Wireless Control Message Protocol) User Data Header mit eingebettetem MMS-Protokoll ist, wobei das Headerelement des User Data Headers (SM-DH) WCMP-Felder im MMS-Protokoll und eine Identifikation (UHI) für WCMP aufweist, wobei die WCMP-Felder einen Identifizierer (MMSI) zur Anzeige, dass ein MMS-Protokoll realisiert wird, und mindestens folgende Elemente zur Festlegung der Nachricht des MMS Nachrichtendienstes aufweisen: Identifizierung (MMSNI), dass es sich um eine Rückmeldung vom Empfänger und/oder vom MMS-Relay an den Sender einer Multimedia Nachricht (MM) über den erfolgreichen Empfang der Multimedia Nachricht (MM) am Empfänger handelt, und Inhalt (MMSC) der Rückmeldung.

2. Verfahren nach Anspruch 1, **dadurch gekennzeichnet, dass** im Headerelement als weiteres Element zur Festlegung der Nachricht des ersten Nachrichtendienstes die Länge (UHEL) des Headerelements angegeben wird.

## Claims

1. Method for transmitting messages in a telecommunication network in which a first message service and a second message service are available, wherein a predetermined first group of messages from the first message service is sent by messages from the second message service, wherein the first message service is the MMS message service and the second message service is the SMS message service, wherein the first group of messages from the MMS message service contains at least one message for acknowledgement of the successful reception of a multimedia message (MM) on the receiver by the receiver and/or by the MMS relay, wherein this acknowledgement of the successful reception of a multimedia message (MM) on the receiver by the receiver and/or by the MMS relay is sent by an SMS short message to the sender of the multimedia message (MM), wherein the SMS short message (SM) from the SMS message service has a header (SM-H) and a data portion (SM-D), wherein the data portion (SM-D) has a user data header (SM-DH) which comprises a header element, wherein the presence of the user data header (SM-DH) is denoted in the header (SM-H) by a flag (TP-UDHI), wherein the user data header (SM-DH) is a WCMP (Wireless Control Message Protocol) user data header with embedded MMS protocol, wherein the header element of the user data header (SM-DH) has WCMP fields in the MMS protocol and an identification (UHI) for WCMP, wherein the WCMP fields have an identifier (MMSI) for indicating that an MMS protocol is being implemented and at least the following elements for defining the message from the MMS message service: identification (MMSNI) that an acknowledgement by the receiver and/or by the MMS relay to the sender of a multimedia message (MM) about the successful reception of the multimedia message (MM) on the receiver is involved, and content (MMSC) of the acknowledgement.

2. Method according to Claim 1, **characterized in that** a further element for defining the message from the first message service that is specified in the header element is the length (UHEL) of the header element.

## Revendications

1. Procédé de transmission de messages dans un réseau de télécommunication, dans lequel sont disponibles un premier service de messagerie et un deuxième service de messagerie, un premier groupe prédéfini de messages du premier service de messagerie étant envoyé par des messages du deuxième service de messagerie, le premier service de messagerie étant le service de messagerie MMS et le deuxième service de messagerie le service de messagerie SMS, le premier groupe de messages du service de messagerie MMS contenant au moins un message de confirmation de la bonne réception d'un message multimédia (MM) par le destinataire de la part du destinataire et/ou du relais MMS, cette confirmation de la bonne réception d'un message multimédia (MM) par le destinataire étant envoyée par le destinataire et/ou par le relais MMS par le biais d'un message court SMS à l'expéditeur du message multimédia (MM), le message court SMS (SM) du service de messagerie SMS présentant un en-tête (SM-H) et une partie de données (SM-D), la partie de données (SM-D) présentant un en-tête de données d'utilisateur (SM-DH) qui comprend un élément d'en-tête, la présence de l'en-tête de données d'utilisateur (SM-DH) dans l'en-tête (SM-H) étant identifiée par un marqueur (TP-UDHI), l'en-tête de données d'utilisateur (SM-DH) étant un en-tête de données d'utilisateur WCMP (Wireless Control Message Protocol - Protocole de message de commande sans fil) avec protocole MMS intégré, l'élément d'en-tête de l'en-tête de données d'utilisateur (SM-DH) présentant des champs WCMP en protocole MMS et une identification (UHI) pour le WCMP, les champs WCMP présentant un identificateur (MMSI) pour indiquer qu'un protocole MMS est réalisé et au moins les éléments suivants pour définir le message du service de messagerie MMS : Identification (MMSNI) qu'il s'agit d'une confirmation à l'expéditeur d'un message multimédia (MM) de la part du destinataire et/ou du relais MMS de la bonne réception du message multimédia (MM) par le destinataire, et contenu (MMSC) de la confirmation.

2. Procédé selon la revendication 1, **caractérisé en ce que** la longueur (UHEL) de l'élément d'en-tête est indiquée dans l'élément d'en-tête en tant qu'élément supplémentaire pour définir le message du premier service de messagerie.
